(19) Europäisches Patentamt
European Patent Office
Office européen des brevets

(11) **EP 4 645 458 A1**

(12) **EUROPEAN PATENT APPLICATION**

(43) Date of publication:
**05.11.2025 Bulletin 2025/45**

(21) Application number: **25168640.8**

(22) Date of filing: **04.04.2025**

(51) International Patent Classification (IPC):
**H01M 4/36** (2006.01)   **H01M 4/505** (2010.01)
**H01M 4/525** (2010.01)   **H01M 4/62** (2006.01)
**H01M 10/0525** (2010.01)   **H01M 4/02** (2006.01)

(52) Cooperative Patent Classification (CPC):
**H01M 4/625; H01M 4/366; H01M 4/505;
H01M 4/525;** H01M 10/0525; H01M 2004/021;
H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.04.2024 KR 20240057092**

(71) Applicant: **SAMSUNG SDI CO., LTD.**
**Yongin-si, Gyeonggi-do 17084 (KR)**

(72) Inventors:
• **KIM, Young-Ki**
**Yongin-si, Gyeonggi-do 17084 (KR)**
• **CHOI, Aram**
**Yongin-si, Gyeonggi-do 17084 (KR)**
• **KIM, Sangmi**
**Yongin-si, Gyeonggi-do 17084 (KR)**
• **DOO, Sungwook**
**Yongin-si, Gyeonggi-do 17084 (KR)**
• **KANG, Gwiwoon**
**Yongin-si, Gyeonggi-do 17084 (KR)**
• **LEE, Soonrewl**
**Yongin-si, Gyeonggi-do 17084 (KR)**

(74) Representative: **Marks & Clerk LLP**
**15 Fetter Lane**
**London EC4A 1BW (GB)**

(54) **POSITIVE ELECTRODE AND RECHARGEABLE LITHIUM BATTERY INCLUDING THE POSITIVE ELECTRODE**

(57)    A positive electrode for a rechargeable lithium battery includes a current collector, a first active material layer on the current collector, with the first active material layer including first particles, second particles, a first binder, and a first conductive material. The positive electrode also includes a second active material layer on the first active material layer, the second active material layer including third particles, a second binder, and a second conductive material. The first particles are an olivine structured compound, the second particles are a layered compound, the third particles are an olivine structured compound. The first particles include a plurality of first primary particles aggregated together, the first particles have an average diameter of about 3 $\mu$m to about 10 $\mu$m, and the first primary particles have an average diameter of about 200 nm or less. The third particles are single particles, and the third particles have an average particle diameter of about 100 nm to about 2 $\mu$m.

FIG. 6

**Description**

BACKGROUND

The present disclosure relates to a positive electrode and a rechargeable lithium battery including the positive electrode. More particularly, the present disclosure relates to a positive electrode including an olivine-based lithium compound and a rechargeable lithium battery including the same.

The rapid spread of battery-powered devices, such as mobile phones, laptop computers, and electric vehicles, has driven a sharp rise in demand for rechargeable batteries provided with high energy density and high capacity. Accordingly, extensive research efforts are directed towards improving the performance of rechargeable lithium batteries.

Rechargeable lithium batteries include a positive electrode and a negative electrode, each including an active material that allows intercalation and deintercalation of lithium ions, and an electrolyte solution. Rechargeable lithium batteries produce electrical energy from redox reactions that take place as lithium ions are intercalated into or deintercalated from the positive electrode and the negative electrode.

SUMMARY

The present disclosure provides a positive electrode for a rechargeable lithium battery that is capable of increasing binding force of a positive active material layer with respect to a current collector, reducing resistance of an electrode plate, and facilitating preparation of an electrode plate. The present disclosure also provides a rechargeable lithium battery having excellent capacity and lifetime characteristics along with high operating voltage and energy density.

An embodiment of the present disclosure provides a positive electrode for a rechargeable lithium battery, including a current collector, a first active material layer on the current collector, the first active material layer including first particles, second particles, a first binder, and a first conductive material, and a second active material layer on the first active material layer, the second active material layer including third particles, a second binder, and a second conductive material, wherein the first particles contain an olivine structured compound of Formula 1 below, the second particles contain a layered compound of Formula 2 below, the third particles contain an olivine structured compound of Formula 3 below, the first particles include a plurality of first primary particles aggregated together, the first particles have an average diameter of about 3 $\mu$m to about 10 $\mu$m, the first primary particles have an average diameter of about 200 nm or less, the third particles are single particles, and the third particles have an average particle diameter of about 100 nm to about 2 $\mu$m,

$$\text{Formula 1:} \qquad Li_{a1}Mn_{x1}Fe_{y1}B1_{z1}PO_{4-b1}$$

In Formula 1, $0.8 \leq a1 \leq 1.2$, $0.4 \leq x1 \leq 0.8$, $0 \leq y1 \leq 0.6$, $0 \leq z1 \leq 0.05$, $0 \leq b1 \leq 0.05$, and $x1 + y1 + z1 = 1$ are satisfied, and B1 includes at least one of Al, Ti, V, and Mg,

$$\text{Formula 2:} \qquad Li_{a2}Ni_{x2}Co_{y2}Mn_{z2}B2_{c2}O_{2-b2}$$

In Formula 2, $0.8 \leq a2 \leq 1.2$, $0.5 \leq x2 \leq 0.8$, $0 \leq y2 \leq 0.3$, $0.1 \leq z2 \leq 0.5$, $0 \leq c2 \leq 0.1$, $0 < b2 \leq 0.05$, and $x2 + y2 + z2 + c2 = 1$ are satisfied, and B2 includes at least one selected of Ti, Mg, V, Nb, and Al, and

$$\text{Formula 3:} \qquad Li_{a3}Mn_{x3}Fe_{y3}B3_{z3}PO_{4-b3}$$

In Formula 3, $0.8 \leq a3 \leq 1.2$, $0.4 \leq x3 \leq 0.8$, $0 \leq y3 \leq 0.6$, $0 \leq z3 \leq 0.05$, $0 \leq b3 \leq 0.05$, and $x3 + y3 + z3 = 1$ are satisfied, and B3 includes at least one of Al, Ti, V, and Mg.

In an embodiment of the present disclosure, a positive electrode for a rechargeable lithium battery includes a current collector, a first active material layer on the current collector, the first active material layer including first particles, second particles, a first binder, and a first conductive material, and a second active material layer on the first active material layer, the second active material layer including third particles, a second binder, and a second conductive material, wherein the first particles contain an olivine structured compound of Formula 1 below, the second particles contain a layered compound of Formula 2 below, the third particles contain an olivine structured compound of Formula 3 below, the first particles include a plurality of first primary particles aggregated together, the first particles have an average diameter of about 3 $\mu$m to about 10 $\mu$m, the first primary particles have an average diameter of about 200 nm or less, the third particles include a plurality of fourth particles that are aggregated together, the third particles have an average particle diameter of about 3 $\mu$m to about 10 $\mu$m, the plurality of fourth particles are each primary particles, and the plurality of fourth particles have an average diameter of about 200 nm or less,

$$\text{Formula 1:} \qquad Li_{a1}Mn_{x1}Fe_{y1}B1_{z1}PO_{4-b1}$$

In Formula 1, $0.8 \leq a1 \leq 1.2$, $0.4 \leq x1 \leq 0.8$, $0 \leq y1 \leq 0.6$, $0 \leq z1 \leq 0.05$, $0 \leq b1 \leq 0.05$, and $x1 + y1 + z1 = 1$ are satisfied, and B1 includes at least one of Al, Ti, V, and Mg,

Formula 2: $Li_{a2}Ni_{x2}Co_{y2}Mn_{z2}B2_{c2}O_{2-b2}$

In Formula 2, $0.8 \leq a2 \leq 1.2$, $0.5 \leq x2 \leq 0.8$, $0 \leq y2 \leq 0.3$, $0.1 \leq z2 \leq 0.5$, $0 \leq c2 \leq 0.1$, $0 < b2 \leq 0.05$, and $x2 + y2 + z2 + c2 = 1$ are satisfied, and B2 includes at least one of Ti, Mg, V, Nb, and Al, and

Formula 3: $Li_{a3}Mn_{x3}Fe_{y3}B3_{z3}PO_{4-b3}$

In Formula 3 above, $0.8 \leq a3 \leq 1.2$, $0.4 \leq x3 \leq 0.8$, $0 \leq y3 \leq 0.6$, $0 \leq z3 \leq 0.05$, $0 \leq b3 \leq 0.05$, and $x3 + y3 + z3 = 1$ are satisfied, and B3 includes at least one of Al, Ti, V, and Mg.

In an embodiment of the present disclosure, a rechargeable lithium battery includes the positive electrode described above.

At least some of the above and other features of the invention are set out in the claims.

BRIEF DESCRIPTION OF THE FIGURES

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 is a simplified conceptual view showing a rechargeable lithium battery according to embodiments of the present disclosure;
FIGS. 2 to 5 are schematic views showing rechargeable lithium batteries according to embodiments of the present disclosure; FIG. 2 shows a cylindrical battery, FIG. 3 shows a prismatic battery, and FIGS. 4 and 5 show pouch-type batteries;
FIG. 6 is a cross-sectional view showing a positive electrode for a rechargeable battery according to embodiments of the present disclosure;
FIG. 7 is an enlarged view showing a first active material layer according to embodiments of the present disclosure;
FIG. 8 is an enlarged view showing a second active material layer according to an embodiment of the present disclosure;
FIG. 9 is an enlarged view showing a second active material layer according to another embodiment of the present disclosure;
FIG. 10 is an enlarged view showing a positive electrode active material layer according to Comparative Examples of the present disclosure;
FIG. 11 depicts scanning electron microscope (SEM) images showing first particles according to an embodiment of the present disclosure;
FIG. 12 depicts SEM images showing second particles according to an embodiment of the present disclosure;
FIG. 13 depicts SEM images showing third particles in the form of single particles according to an embodiment of the present disclosure; and
FIG. 14 depicts SEM images showing third particles in the form of secondary particles according to another embodiment of the present disclosure.

DETAILED DESCRIPTION

In order to sufficiently understand the configuration and effects of the present disclosure, preferred embodiments of the present disclosure will be described with reference to the accompanying drawings. It should be noted, however, that the present disclosure is not limited to the following embodiments and may be implemented in various forms and variously modified. The embodiments herein are provided so that present disclosure will be thorough and complete and will fully convey the scope of the present disclosure to those skilled in the art.

Herein, when a component is referred to as being on another component, the component may be directly on another component, or an intervening third component may be present. In addition, in the drawings, thicknesses of components are exaggerated for effectively describing technical contents. Like reference numerals refer to like elements throughout.

The embodiments described herein will be explained with reference to the cross-sectional views and/or plan views as ideal example views of the present disclosure. In the drawings, the thicknesses of films and regions are exaggerated for effective description of the technical contents. Thus, regions presented as an example in the drawings have general properties, and shapes of the exemplified areas are used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof.

Terms used herein are not for limiting the present disclosure but for describing the embodiments. As used herein, the singular forms include the plural forms as well, unless the context clearly indicates otherwise. The meaning of "comprises" and/or "comprising" used herein does not exclude the presence or addition of one or more other components besides a mentioned component.

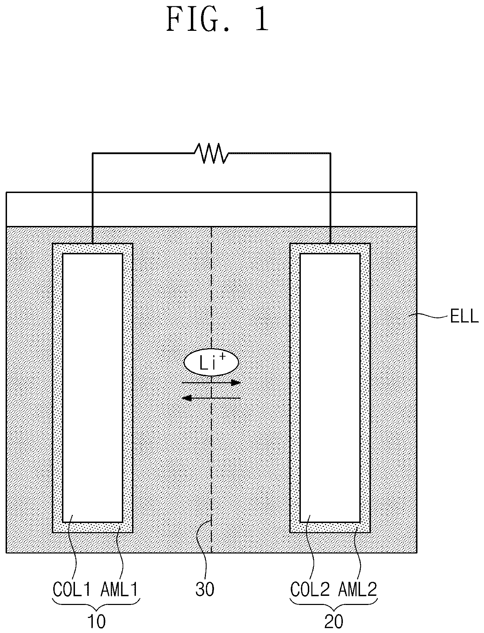

FIG. 1 is a simplified conceptual diagram showing a rechargeable lithium battery according to embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode

The positive electrode 10 for a rechargeable lithium battery includes a current collector COL1 and a positive electrode active material layer AML1 on the current collector. The positive electrode active material layer AML1 includes a positive electrode active material and further includes a binder and a conductive material (e.g., an electrically conductive material). The positive electrode 10 may further include an additive that can serve as a sacrificial positive electrode.

Al may be used as the current collector COL1, but the embodiment of the present disclosure is not limited thereto.

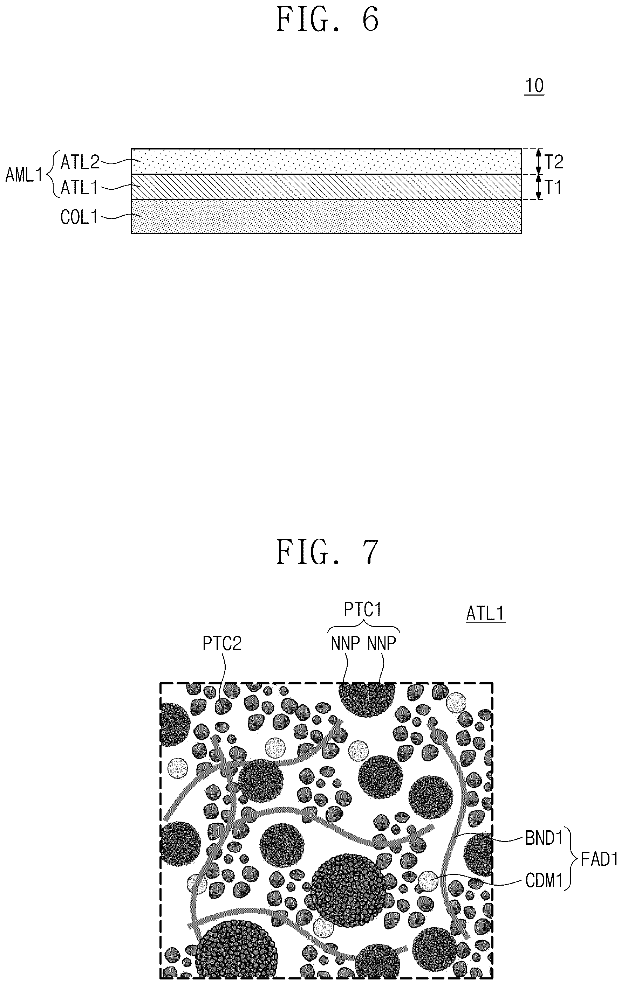

The positive electrode 10 will be described in detail below with reference to FIG. 6.

### Negative Electrode

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material).

The negative electrode active material layer AML2 may include, for example, about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other and also to attach the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart electrical conductivity to the electrode. Any material that does not cause chemical change (e.g., does not cause an undesirable chemical change in the rechargeable lithium battery) and conducts electrons may be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The current collector COL2 may include a copper foil, a nickel foil, a stainless steel foil, a titanium foil, a nickel foam, a copper foam, a polymer substrate coated with a conductive metal, or a combination thereof.

**Negative Electrode Active Material**

The negative electrode active material in the negative electrode active material layer AML2 may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. Examples of the crystalline carbon may be graphite such as irregular, planar, flaky, spherical, or fibrous natural graphite or artificial graphite, and examples of the amorphous carbon may be soft carbon (low-temperature fired carbon), hard carbon, mesophase pitch carbide, fired cokes, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x < 2$), a Si-Q alloy, or a combination thereof. In the Si-Q alloy, Q may be selected from an alkali metal, an alkaline-earth metal, a Group 13 element, a Group 14 element (excluding Si), a Group 15 element, a Group 16 element, a transition metal, a rare earth element, or a combination thereof. The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be provided between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

**Separator**

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON®, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but the present disclosure is not limited to these examples.

The organic material and the inorganic material may be mixed in one coating layer, or a coating layer including an organic material and a coating layer including an inorganic material may be stacked.

## Electrolyte Solution

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1: 1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

## Rechargeable Lithium Battery

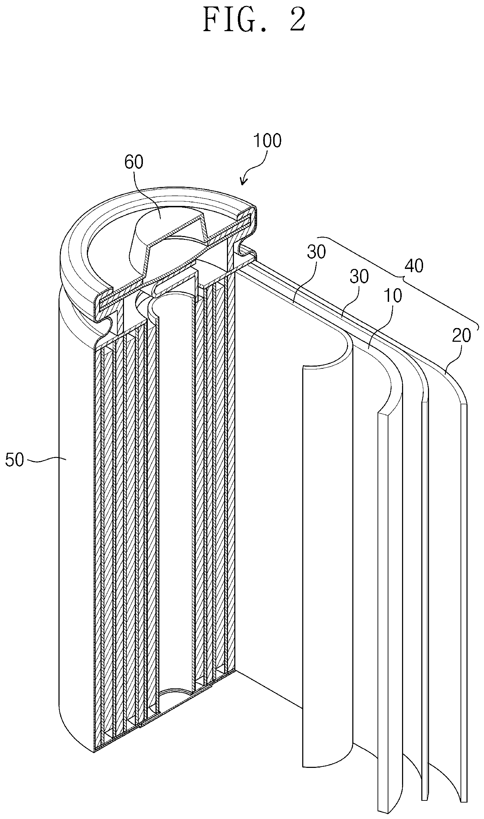

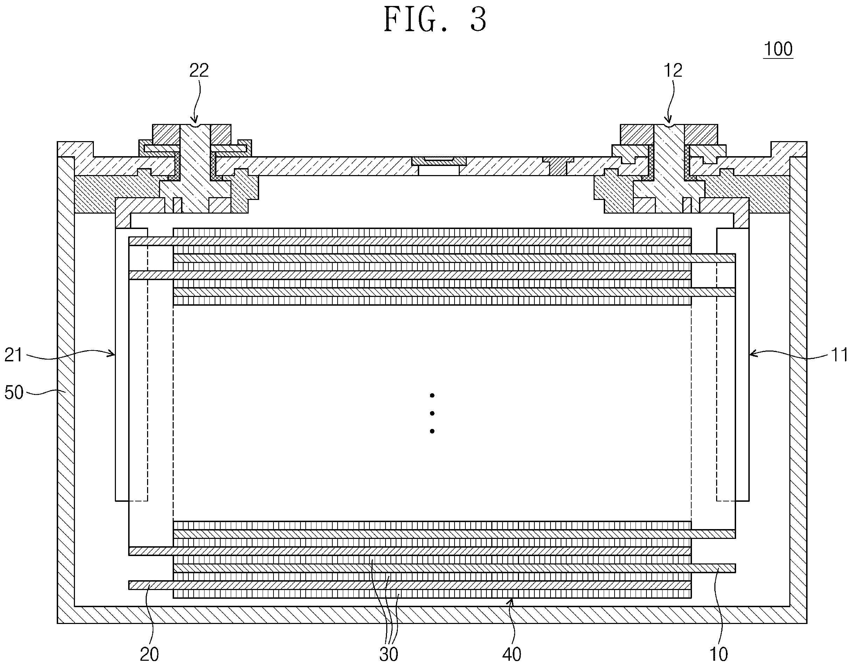

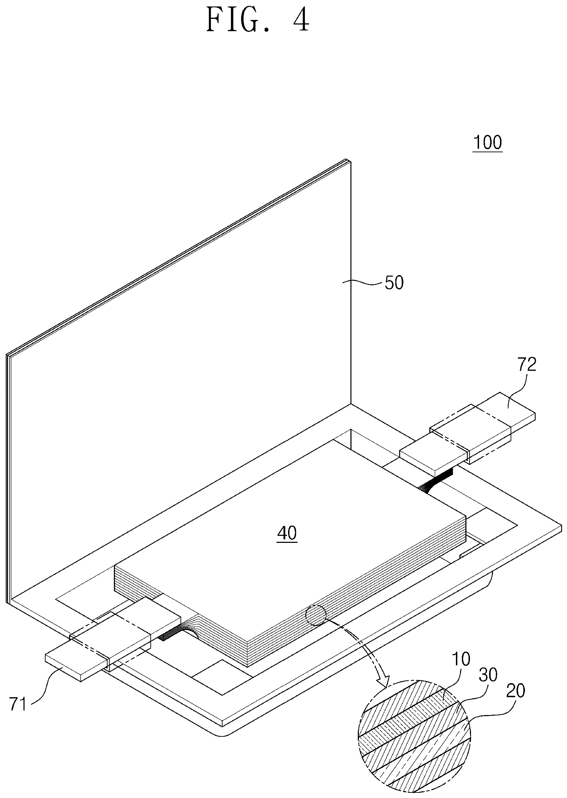

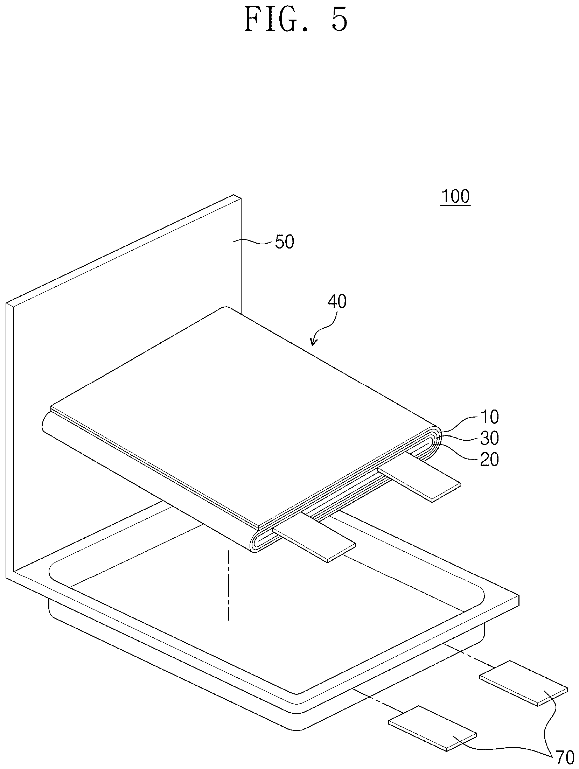

A rechargeable lithium battery may be classified into cylindrical, prismatic, pouch, or coin-type batteries, and the like depending on its shape. FIGS. 2 to 5 are schematic views illustrating a rechargeable lithium battery according to embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to embodiments may used in automobiles, mobile phones, and/or various types of electric devices, as non-limiting examples.

FIG. 6 is a cross-sectional view showing a positive electrode for a rechargeable lithium battery according to embodiments of the present disclosure. Referring to FIG. 6, as described above, the positive electrode 10 includes a current collector COL1 and a positive electrode active material layer AML1. The positive electrode active material layer AML1 is provided on the current collector COL1.

The positive electrode active material layer AML1 includes positive electrode active material particles PTC1, PTC2, and PTC3, which will be described below. The positive electrode active material layer AML1 may contain about 90 wt% to about 99 wt%, 90 wt% to about 97.6 wt%, or 92 wt% to about 97.6 wt% of the positive electrode active material particles PTC1, PTC2, and PTC3 with respect to 100 wt% of the positive electrode active material layer AML1.

The positive electrode active material layer AML1 includes binders BND1 and BND2 and conductive materials CDM1 and CDM2, which will be described below. The positive electrode active material layer AML1 may contain about 2.4 wt% to about 10 wt% or 2.4 wt% to about 8 wt% of each of the binders BND1 and BND2 and the conductive materials CDM1 and CDM2 with respect to 100 wt% of the positive electrode active material layer AML1.

The positive electrode active material layer AML1 includes a first active material layer ATL1 and a second active material layer ATL2. The positive electrode active material layer may thus a nano-sized olivine-based compound in large quantities and increase binding force with respect to a current collector, thereby facilitating preparation of an electrode plate and reducing resistance of an electrode plate. In addition, a rechargeable lithium battery including the positive electrode active material layer AML1 may be provided with excellent performance characteristics.

The first active material layer ATL1 may have a thickness T1. In an embodiment, T1 may increase with an increase in weight of the first particles PTC1 and/or the second particles PTC2 included in the first active material layer ATL1. The second active material layer ATL2 may have a thickness T2. In an embodiment, T2 may increase with an increase in weight of the third particles PTC3 included in the second active material layer ATL2.

A thickness ratio T1:T2 of the first active material layer ATL1 and the second active material layer ATL2 may be about 3:7 to about 7:3. For example, the thickness ratio T1:T2 of the first active material layer ATL1 and the second active material layer ATL2 may be about 5:5. When the thickness ratio T1:T2 of the first active material layer ATL1 and the second active material layer ATL2 satisfies this range, the positive electrode active material layer AML1 has improved binding force with respect to the current collector COL1. Thus, the positive electrode active material layer AML1 may facilitate preparation of an electrode plate and reduce resistance of an electrode plate. In addition, a rechargeable lithium battery having excellent performance characteristics may be provided.

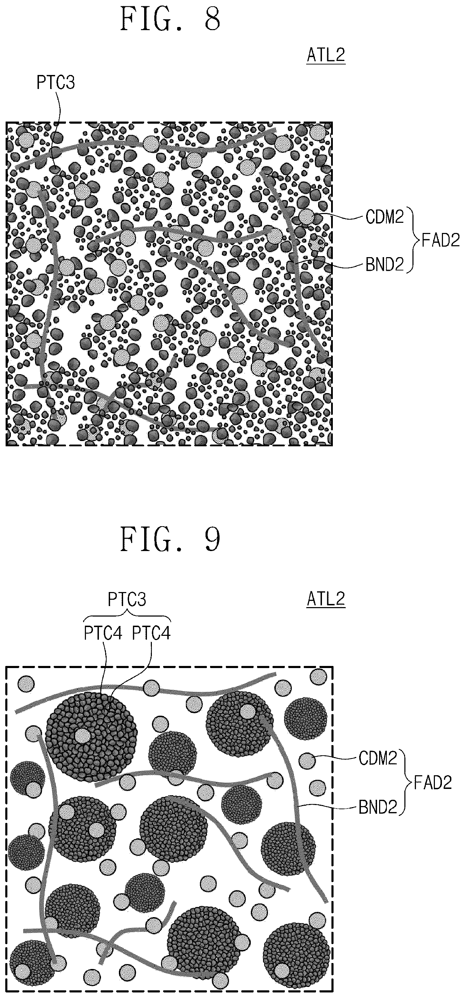

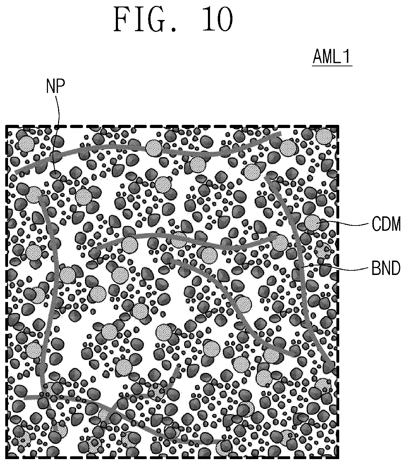

FIG. 7 is an enlarged view showing the first active material layer ATL1 according to embodiments of the present disclosure. FIG. 8 is an enlarged view showing the second active material layer ATL2 according to an embodiment of the present disclosure. FIG. 9 is an enlarged view showing the second active material layer ATL2 according to another embodiment of the present disclosure. FIG. 10 is an enlarged view showing a positive electrode active material layer AML1 according to Comparative Examples of the present disclosure.

Referring to FIG. 7, the first active material layer ATL1 includes first particles PTC1, second particles PTC2, and a first functional additive FAD1. The first functional additive FAD1 includes a first binder BND1 and a first conductive material CDM1.

As the first active material layer ATL1 includes the second particles PTC2, it may reduce the amount of the first functional additive FAD1 that is needed. For example, a weight ratio of the first functional additive FAD1 in the first positive electrode active material layer ATL1 may be about 0.024 to about 0.06 (e.g. about 2.4 parts by weight to about 6.0 parts by weight with respect to 100 parts by weight of the first active material layer ATL1). The weight ratio of the first functional additive FAD1 in the first active material layer ATL1 may be defined as a weight of the first functional additive FAD1 with respect to a total weight of the first active material layer ATL1.

The amount of the first binder BND1 may be about 1.2 parts by weight to about 3.0 parts by weight, or about 1.2 parts by weight, with respect to 100 parts by weight of the first active material layer ATL1. The amount of the first conductive material CDM1 may be about 1.2 parts by weight to about 3.0 parts by weight, or about 1.2 parts by weight, with respect to 100 parts by weight of the first active material layer ATL1.

Referring to FIGS. 8 and 9, the second active material layer ATL2 includes third particles PTC3 and a second functional additive FAD2. The second functional additive FAD2 includes a second binder BND2 and a second conductive material CDM2.

The weight ratio of the second functional additive FAD2 in the second active material layer ATL2 may be equal to or greater than the weight ratio of the first functional additive FAD1 in the first active material layer ATL1. For example, a ratio of the weight ratio of the second functional additive FAD2 to the weight ratio of the first functional additive FAD1 (weight ratio of the second functional additive/weight ratio of the first functional additive) may be about 1 to about 4.5. For example, a ratio of the weight of the second functional additive FAD2 to the weight of the first functional additive FAD1 may be about 1.5 to about 4 or about 1.6 to about 4. When the ratio of the weight ratio of the second functional additive FAD2 to the weight ratio of the first functional additive FAD1 satisfies these ranges, the positive electrode active material layer AML1 has improved binding force with respect to the current collector COL1, and may thus facilitate preparation of an electrode plate and reduce resistance of an electrode plate. In addition, a rechargeable lithium battery including the positive electrode active material layer may have excellent performance.

A weight ratio of the second functional additive FAD2 in the second positive electrode active material layer ATL2 may be about 0.024 to about 0.1 (e.g. about 2.4 parts by weight to about 10.0 parts by weight with respect to 100 parts by weight of the second active material layer ATL2). The weight ratio of the second functional additive FAD2 in the second active material layer ATL2 may be defined as a weight of the second functional additive FAD2 with respect to a total weight of the second active material layer.

The amount of the second binder BND2 may be equal to or greater than the amount of the first binder BND1. For example, the amount of the second binder BND2 may be about 1.2 parts by weight to about 5 parts by weight with respect to 100 parts by weight of the second active material layer ATL2.

The amount of the second conductive material CDM2 may be equal to or greater than the amount of the first conductive material CDM1. The amount of the second conductive material CDM2 may be about 1.2 parts by weight to about 5 parts by weight with respect to 100 parts by weight of the second active material layer ATL2.

The binders BND1 and BND2 serve to attach the positive electrode active material particles PTC1, PTC2, and PTC3 to one another and also to attach the positive electrode active materials PTC1 and PTC2 to the current collector COL1. Examples of the binders BND1 and BND2 include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited to these examples.

The conductive materials CDM1 and CDM2 may be used to impart electrical conductivity to the electrode. Any material that does not cause chemical change (e.g., does not cause an undesirable chemical change in the rechargeable lithium battery) and conducts electrons may be used in the battery. Examples of the conductive materials CDM1 and CDM2 include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

Hereinafter, the first particles PTC1, the second particles PTC2, and the third particles PTC3 will be described in more detail.

**First Particles**

Referring again to FIG. 7, the first particles PTC1 are in the form of polycrystal and may include secondary particles in which at least two primary particles are aggregated (first secondary particle). That is, one first particle PTC1 includes a plurality of first primary particles NNP aggregated together. The first primary particles NNP may each be a primary particle.

The first particles PTC1 may have an average particle diameter (D50) of about 2 $\mu$m to about 15 $\mu$m, about 3 $\mu$m to about 10 $\mu$m, or about 3 $\mu$m to about 7 $\mu$m. For example, the first particle PTC1 may have an average particle diameter of about 5 $\mu$m. The average diameter may be measured through a particle size analyzer. The average diameter may indicate a particle diameter when a cumulative volume is about 50 vol% in particle size distribution. The first particles PTC1 may have a maximum particle diameter (Dmax) of about 10 $\mu$m or greater, or about 15 $\mu$m or greater.

The average diameter of the first primary particles NNP may be less than the average diameter of the first particles PTC1. The first primary particles NNP may have an average diameter of about 200 nm or less. For example, the first primary particles NNP may have an average diameter of about 10 nm to about 200 nm, about 20 nm to about 200 nm, about 50 nm to about 200 nm, or about 100 nm to about 200 nm. In embodiments, the average diameter of the first primary particles NNP may indicate a diameter measured by randomly selecting about 30 first primary particles NNP from an electron micrograph of a positive electrode active material. The first primary particles NNP may have a uniform particle diameter.

When the particle diameters of the first particle PTC1 and the first primary particles NNP satisfy the ranges described above, and when the size of the first primary particles NNP is uniform, a rechargeable lithium battery containing the first particles PTC1 and the first primary particles NNP may have improved charge/discharge capacity and low-temperature capacity.

The first particles PTC1 includes an olivine-based lithium compound represented by Formula 1:

$$Li_{a1}Mn_{x1}Fe_{y1}B1_{z1}PO_{4-b1}$$

In Formula 1, $0.8 \leq a1 \leq 1.2$, $0.4 \leq x1 \leq 0.8$, $0 \leq y1 \leq 0.6$ (e.g. $0.2 \leq y1 \leq 0.6$), $0 \leq z1 \leq 0.05$, $0 \leq b1 \leq 0.05$, and $x1 + y1 + z1 = 1$ are satisfied. B1 includes at least one of Al, Ti, V, and Mg. For example, B1 may include Ti. B1 may be a dopant with which the first particles PTC1 are doped. B1 may cause the first primary particles NNP to be uniform in size.

A doping amount of B1 may be about 500 ppm to about 3000 ppm. The doping content of B1 may be defined as a weight of the doping element B1 with respect to a total weight of metals (i.e., Mn, Fe and B1) excluding lithium among the olivine-based lithium compounds represented by Formula 1 above. When the doping amount of B1 satisfies the range described above, the size of the first particles PTC1 may be uniform.

In embodiments, the first particles PTC1 may include coating layers on their surfaces. The coating layers may entirely cover the surfaces of the first particles PTC1 or may partially cover the surfaces of the first particles PTC1. For example, the coating layers may include carbon and/or a carbon-containing compound. The first particles PTC1 provide improved structural stability and electrical conductivity to the coating layers.

The coating layers may further include at least one of a titanium-containing compound, a magnesium-containing compound, and a vanadium-containing compound. These metal-containing compounds may be, for example, metal oxides, metal hydroxides, metal carbonates, composites thereof, or mixtures thereof. The metal-containing compounds may further include other metals or non-metallic elements. For example, the metal-containing compounds may further include lithium.

In embodiments, the first particles PTC1 may further include grain boundary coating layers on surfaces of each of the first primary particles NNP. The grain boundary coating layers may be present inside the first particles PTC1. The grain boundary coating layers may be applied along interfaces between the first primary particles NNP inside the first particles PTC1. That is, the grain boundary coating layer may indicate a material applied onto a grain boundary inside each of the first particles PTC1. The grain boundary coating layers may include carbon and/or a carbon-containing compound. The grain boundary coating layers may further include at least one of a titanium-containing compound, a magnesium-containing compound, and a vanadium-containing compound.

The inside of each of the first particles PTC1 described above may indicate the entire inside portion of the first particle PTC1 excluding the surface of the first particle PTC1. For example, the inside of the first particle PTC1 may indicate a region of the inside from about 10 nm in depth, or from about 10 nm to about 2 $\mu$m in depth, with respect to the surface of the first particle PTC1.

The first particles PTC1 may further include grain boundary coating portions and may thus have greater structural stability and have a uniform coating layer formed on the surfaces of the first particles. In addition, as the first particles PTC1 may further include grain boundary coating portions, and the particles may thus have further improved electrical conductivity.

The first particles PTC1 may further include carbon derived from the coating layers and/or the grain boundary coating layers described above. The first particle PTC1 may have a carbon element content of about 0.5 wt% to about 10 wt%, about 1 wt% to about 3 wt%, or about 1.5 wt% to about 2.5 wt%.

The first particles PTC1 may be in the shape of spheres in which nano-sized first primary particles NNP are aggregated. The first particles PTC1 may have the first primary particles NNP closely aggregated, and may thus exhibit the following characteristics. The first particles PTC1 may be in the shape of spheres or ovals. The average diameter (D50) of the first particles PTC1 may be about 2 $\mu$m to about 15 $\mu$m. The first particles PTC1 may have a porosity of about 20% to about 40%. Here, the porosity (n) can be defined as pore volume (Vp) divided by total volume (Vt) of particles, or

$$n = \frac{V_p}{V_t}$$

. A Span value of the first particle PTC1, analyzed through a particle size analyzer, may be about 0.3 to about 0.75.

## Second Particles

Referring again to FIG. 7, the second particles PTC2 are a nickel-based active material and include lithium nickel-based composite oxide. For example, the second particles PTC2 may include a high nickel-based positive electrode active material containing a large amount of nickel. The high nickel-based positive electrode active material provide for high capacity and high performance in a battery. In other examples, the second particles PTC2 may include a mid nickel-based positive electrode active material containing an intermediate amount of nickel. The mid nickel-based positive electrode active material may achieve high capacity and high performance in a battery.

The second particles PTC2 includes a layered lithium nickel-based composite oxide represented by Formula 2:

$$Li_{a2}Ni_{x2}Co_{y2}Mn_{z2}B2_{c2}O_{2-b2}$$

In Formula 2, $0.8 \leq a2 \leq 1.2$, $0.5 \leq x2 \leq 0.8$, $0 \leq y2 \leq 0.3$, $0.1 \leq z2 \leq 0.5$, $0 \leq c2 \leq 0.1$, $0 < b2 \leq 0.05$, and $x2 + y2 + z2 + c2 = 1$ are satisfied. For example, c2 may be 0.005. B2 may be a dopant with which the second particles PTC2 is doped. B2 includes at least one of Ti, Mg, V, Nb, and Al. For example, B2 may include Al.

In embodiments, the second particles PTC2 may include second coating layers on surfaces of the particles. When the second particles PTC2 includes the second coating layers, they may effectively prevent structural collapse caused by repeated charging/discharging. Accordingly, rechargeable batteries including the second particles PTC2 may have improved lifetime characteristics.

The second coatings layer may include a boron-containing compound, an aluminium-containing compound, or a combination of a boron-containing compound and an aluminium-containing compound. Such metal-containing compounds in the second coating layers may be, for example, metal oxides, metal hydroxides, metal carbonates, composites thereof, or mixtures thereof. The metal-containing compounds may further include other metals or non-metallic elements. For example, the second coating layers may further include lithium, manganese, and/or nickel.

A method of measuring the metal content in the second coating layers of the second particles PTC2 may include performing scanning electron microscopy and energy dispersive X-ray spectroscopy (SEM-EDS) on the second particles PTC2. Through such analysis, the content of boron and/or aluminium in the second coating layers may be determined. In addition to SEM-EDS, methods of measuring the metal content in the second coating layers may include inductively coupled plasma-mass spectrometry (ICP-MS), inductively coupled plasma optical emission spectroscopy (ICP-OES), and the like.

The size of the second particles PTC2 may be expressed in micro units. When the first active material layer ATL1 includes the first particles PTC1 and the second particles PTC2, the positive electrode active material layer AML1 may contain a nano-sized olivine-based compound in large quantities and have greater binding force with respect to a current collector. This, in turn, may facilitate preparation of an electrode plate and reduce resistance of an electrode plate. In addition, a rechargeable lithium battery having excellent performance may be provided.

The second particles PTC2 may have a single particle form

Herein, the single particle may indicate a single type of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. Alternatively, the single particle may be a particle containing several crystals. The single particle may be in an isolated form.

In embodiments, each of the second particles PTC2 may have a form constituted with one single particle. In other embodiments, the second particles PTC2 may have a form in which a plurality of single particles are attached together. The positive electrode active material according to embodiments of the present disclosure includes the second particles PTC2 in the form of single particles, and may thus allow rechargeable batteries to obtain high capacity and high energy density. Herein, the second particles PTC2 in the form of single particles may be defined as a second single particles. In addition, herein, the second single particles may be defined as a small particles.

The second particles PTC2 in the form of single particles may have an average particle diameter (D50) of about 2 $\mu$m to about 15 $\mu$m, about 2 $\mu$m to about 10 $\mu$m, about 2 $\mu$m to about 5 $\mu$m, or about 3 $\mu$m to about 5 $\mu$m. As discussed above, the average particle diameter may be measured through a particle size analyzer. The average particle diameter may indicate a particle diameter when a cumulative volume is about 50 vol% in particle size distribution.

In other examples, the second particles PTC2 may be in the form of polycrystal and may include secondary particles in each which at least two second primary particles are aggregated. That is, one second particle PTC2 may include a plurality of second primary particles aggregated together. The second particles PTC2 composed of the plurality of second primary particles may be in spherical or oval shapes. Herein, the second particles PTC2 in the form of a secondary particles may be defined as a second secondary particles. In addition, herein, the second secondary particles may be defined as large particles.

The second secondary particles may have an average particle diameter (D50) of about 10 $\mu$m to about 25 $\mu$m or about 12 $\mu$m to about 18 $\mu$m. The second secondary particles may have a greater average particle diameter (D50) than the first particles PTC1.

As noted above, the second particles PTC2 may be present as second single particles or second secondary particles. In addition, the second particles PTC2 may be a positive electrode active material including the second single particles and the second secondary particles. That is, both the second single particles and the second secondary particles may be interpreted to indicate the second particles PTC2. In addition, the second particles PTC2 may be interpreted to indicate particles containing the second single particles and the second secondary particles.

Herein, when the second particles PTC2 will be referred to as bimodal when the particles are present as both single particles and a secondary particles or present as both large particles and small particles in a positive electrode active material may be called bimodal.

The second particles PTC2 may have a small Brunauer-Emmett-Teller (BET) specific surface area. The second particles PTC2 may have a smaller BET specific surface area than the first particles PTC1. For example, the second particles PTC2 may have a BET specific surface area of about 0.8 m$^2$/g to about 1.2 m$^2$/g. In a further example, the second particles PTC2 may have a BET specific surface area of about 1 m$^2$/g. Such second particles may result in only a small amount of binder being necessary in combination with a nano-sized olivine-based compound of the first particles.

**Third Particles**

Referring again to FIG. 8, the third particles PTC3 may be in the form of single particles. The third particles PTC3 may be provided in various sizes. For example, in some embodiments, the third particles PTC3 may have an average diameter of about 1 $\mu$m. The third particles PTC3 may have a minimum diameter of about 20 nm to about 500 nm, or about 200 nm to about 300 nm. The minimum particle diameter may indicate a diameter measured by randomly selecting about 30 primary particles (hereinafter, third primary particles) from an electron micrograph of a positive electrode active material. In other embodiments, the third particles PTC3 may have an average particle diameter (D50) of about 100 nm to about 2 $\mu$m or about 500 nm to about 2 $\mu$m. As discussed above, the average particle diameter may be measured using a particle size analyzer. The average diameter may indicate a particle diameter when a cumulative volume is about 50 vol% in particle size distribution.

The third particles PTC3 includes an olivine structured compound of Formula 3:

Formula 3 $\qquad$ $Li_{a3}Mn_{x3}Fe_{y3}B3_{z3}PO_{4-b3}$

In Formula 3, $0.8 \leq a3 \leq 1.2$, $0.4 \leq x3 \leq 0.8$, $0 \leq y3 \leq 0.6$ (e.g. $0.2 \leq y3 \leq 0.6$), $0 \leq z3 \leq 0.05$, $0 \leq b3 \leq 0.05$, and $x3 + y3 + z3 = 1$ are satisfied. For example, z3 may be 0.002. B3 may be a dopant with which the third particles PTC3 are doped. B3 includes at least one of Al, Ti, V, and Mg. B3 may cause the third primary particles to be uniform in size. Thus, rechargeable lithium batteries that include the third particles may have improved charging/discharging efficiency, low-temperature properties, and lifetime characteristics.

In embodiments, the third particles PTC3 may include coating layers on surfaces of the particles. The coating layers may entirely cover the surfaces of the third particles PTC3, or may partially cover the surfaces of the third particles PTC3. The coating layers may include carbon and/or a carbon-containing compound. The third particles PTC3 with the coating layers may have improved structural stability and electrical conductivity.

The coating layers may further include at least one of a titanium-containing compound, a magnesium-containing compound, and a vanadium-containing compound. Such metal-containing compounds may be, for example, metal oxides, metal hydroxides, metal carbonates, composites thereof, or mixtures thereof. The metal-containing compounds may further include other metals or non-metallic elements. For example, the metal-containing compounds may further include lithium.

The third particles PTC3 may further include carbon derived from the coating layers described above. The amount of carbon in the third particles PTC3 may be about 0.5 wt% to about 10 wt%, about 1 wt% to about 3 wt%, or about 1.5 wt% to about 2.5 wt%.

When the third particles PTC3 are single particles, the weight ratio of the second functional additive FAD2 in the second active material layer ATL2 may be greater than the weight ratio of the first functional additive FAD1 in the first active material layer ATL1. For example, a ratio of the weight of the second functional additive FAD2 to the weight of the first functional additive FAD1 may be about 1.5 to about 4.

When the third particle PTC3 are single particles, the amount of the second functional additive FAD2 may be about 4 parts by weight to about 10 parts by weight, about 4 parts by weight to about 8 parts by weight, or about 6 parts by weight, with respect to 100 parts by weight of the second active material layer ATL2. For example, the amount of the second binder BND2 may be about 2 parts by weight to about 5 parts by weight, about 2 parts by weight to about 4 parts by weight, or about 3 parts by weight, with respect to 100 parts by weight of the second active material layer. For example, the amount of the second conductive material CDM2 may be about 2 parts by weight to about 5 parts by weight, about 2 parts by weight to about 4 parts by weight, or about 3 parts by weight, with respect to 100 parts by weight of the second active material layer. When the amount of the second functional additive FAD2 satisfies these ranges, the second active material layer ATL2 may achieve desired binding force.

Referring again to FIG. 9, the third particles PTC3 may be in the form of a polycrystal and may include secondary particles in which at least two primary particles are aggregated (hereinafter, third secondary particles). That is, one third particle PTC3 may include a plurality of fourth particles PTC4 aggregated together. The fourth particles PTC4 may each be a primary particle. The third particles PTC3 may be in spherical or oval shapes.

In an embodiment, the third particles PTC3 may further include grain boundary coating layers on a surface of each of the fourth particles PTC4. The grain boundary coating layers may be present inside the third particles PTC3. For example, the grain boundary coating layers may be formed along an interface between the fourth particles PTC4 inside the third particles PTC3. That is, the grain boundary coating layer may indicate a material applied onto a grain boundary inside a third particle PTC3. The grain boundary coating layers may include carbon and/or a carbon-containing compound. The grain boundary coating layer may further include at least one of a titanium-containing compound, a magnesium-containing compound, and a vanadium-containing compound.

The insides of the third particles PTC3 described above may indicate the entire inside portions of the third particles PTC3 excluding the surfaces of the third particles PTC3. For example, the inside of a third particle PTC3 may indicate a region of the entire inside from about 10 nm in depth, or from about 10 nm to about 2 $\mu$m in depth, with respect to the surface of the third particle PTC3.

The third particles PTC3 that include a grain boundary coating portion may have greater structural stability and have uniform coating layer formed on their surfaces. In addition, such third particles PTC3 may thus have improved electrical conductivity.

The third particles PTC3 may further include carbon derived from the coating layers and/or the grain boundary coating layers described above. The amount of carbon element in the third particles PTC3 may be about 0.5 wt% to about 10 wt%, about 1 wt% to about 3 wt%, or about 1.5 wt% to about 2.5 wt%.

A carbon elementary analysis according to one or more embodiments of the present disclosure may be performed with an elemental analyzer (e.g., Elementar Micro Cube commercially available from Elementar Analysensysteme GmbH). A more detailed operating method and conditions may be as follows. 1 to 2 mg of a sample was weighed in a tin cup, and the sample was placed into an automatic sampling tray and fed into a combustion tube through a ball valve to be burned at a combustion temperature of 1,000 °C. Thereafter, reduced copper was used to reduce the combusted gas to form carbon dioxide. A TCD detector was utilized to detect the carbon dioxide.

In a method of measuring an amount of carbon element according to one or more embodiments of the present disclosure, a scanning electron microscope-energy dispersive X-ray spectroscopy (SEM-EDS) was performed on a particle surface, and a quantitative analysis was executed to obtain the amount of carbon element. Besides SEM-EDS, inductively coupled plasma mass spectrometry (ICP-MS) or inductively coupled plasma optical emission spectroscopy (ICP-OES) may be used to measure the amount of carbon element.

When the third particles PTC3 are secondary particles (third secondary particles), the third particles PTC3 may have an average diameter (D50) of about 2 $\mu$m to about 15 $\mu$m, about 3 $\mu$m to about 10 $\mu$m, or about 3 $\mu$m to about 7 $\mu$m. For example, the third particles PTC3 may have an average particle diameter of about 5 $\mu$m. The third particles PTC3 may have a greater average particle diameter than the fourth particles PTC4 (described below). As discussed above, the average diameter may be measured through a particle size analyzer, and the average diameter may indicate a particle diameter when a cumulative volume is about 50 vol% in particle size distribution.

The fourth particles PTC4 may have an average diameter of about 200 nm or less. For example, the fourth particles PTC4 may have an average diameter of about 10 nm to about 200 nm, about 20 nm to about 200 nm, about 50 nm to about 200 nm, or about 100 nm to about 200 nm. The average diameter may be measured by randomly selecting about 30 fourth particles PTC4 from an electron micrograph of a positive electrode active material. The fourth particles PTC4 may have uniform particle diameters. The fourth particles PTC4 may have a smaller diameters than the third primary particles. For example, the average diameter of the fourth particles PTC4 may be about 100 nm smaller than the average diameter of the third primary particles.

When the fourth particles and the average particle diameter of the fourth particles satisfy the ranges described above, and the size of the fourth particles is uniform and a rechargeable lithium battery including the fourth particles may have improved charge/discharge capacity and low-temperature capacity.

As the third particles PTC3 may be formed by closely aggregated the fourth particles PTC4, the third particles PTC3 may thus exhibit the following characteristics. The third particles PTC3 may be in the shapes of spheres or ovals. The third particles PTC3 may have an average diameter (D50) of about 2 $\mu$m to about 15 $\mu$m. The third particles PTC3 may have a porosity of about 20% to about 40%. A Span value of the third particles PTC3, analyzed through a particle size analyzer, may be about 0.3 to about 0.75.

When the third particles PTC3 are secondary particles, the weight ratio of the second functional additive FAD2 in the second active material layer ATL2 may be equal to or greater than the weight ratio of the first functional additive FAD1 in the first active material layer ATL1. For example, a ratio of the weight of the second functional additive FAD2 to the weight of the first functional additive FAD1 may be about 1 to about 4. Also when the third particles PTC3 are secondary particles, an amount of the second functional additive FAD2 may be about 2.4 parts by weight to 6.0 parts by weight, or about 2.4 parts by weight, with respect to 100 parts by weight of the second active material layer ATL2. For example, the amount of the second binder may be about 1.2 parts by weight to about 3.0 parts by weight, or about 1.2 parts by weight, with respect to 100 parts by weight of the second active material layer. The amount of the second conductive material may be about 1.2 parts by weight to about 3.0 parts by weight, or about 1.2 parts by weight, with respect to 100 parts by weight of the second active material layer. When the amount of the second functional additive FAD2 satisfies the ranges described above, the second active material layer ATL2 may achieve desired binding force.

The third particles PTC3 have a greater average diameter when in the form of secondary particles (third secondary particle) than when in the form of a single particles, and accordingly, the second active material layer ATL2 may have desired binding force even when the third particles PTC3 in the form of secondary particles contains a smaller amount of the second binder BND2 than when the third particles are in the form of single particles.

According to Comparative Examples of the present disclosure in FIG. 10, the positive electrode active material layer AML1 may only include a nanoscale positive electrode active material. The nanoscale positive electrode active material includes an olivine-based compound and may include nano-sized particles NP. For example, the olivine-based compound may be represented by Formula 1 above and/or Formula 3 above. In the nanoscale positive electrode active material, the nano-sized particles NP may agglomerate to have a particle form that is similar to that of the first particles PTC1 shown in FIG. 7 or that of the third particles PTC3 shown in FIG. 9. Though the nano-sized particles NP agglomerate, unlike the first particle PTC1 shown in FIG. 7 or the third particle PTC3 shown in FIG. 9, the nanoscale positive electrode active material may not be spherical. That is, the nanoscale positive electrode active material may have an irregular shape. The nanoscale positive electrode active material may be provided in various sizes. For example, the nanoscale positive electrode active material may have an average diameter (D50) of about 500 nm to about 2.5 $\mu$m, or about 1 $\mu$m. The nanoscale positive electrode active material may have a minimum particle diameter of about 100 nm to about 500 nm, or about 200 nm to about 300 nm. As discussed above, the average particle diameter may be measured through a particle size analyzer. As also discussed above, the average particle diameter may indicate a particle diameter when a cumulative volume is about 50 vol% in particle size distribution. For example, the minimum or average particle diameter may indicate a diameter measured by randomly selecting about 30 primary particles from an electron micrograph of the nanoscale positive electrode active material. The minimum average diameter of the nanoscale positive electrode active material may be about 100 nm greater than the average diameter of the first primary particles NNP. The nanoscale positive electrode active material may have a porosity greater than about 40%. A span value of the nanoscale positive electrode active material, analyzed through a particle size analyzer, may be about 0.3 to about 0.75.

Referring again to FIG. 7, the first active material layer ATL1 according to an embodiment of the present disclosure includes both the first particles PTC1 and the second particles PTC2.

The first particles PTC1 is a lithium iron phosphate-based compound having an olivine structure that is highly stable and has high chemical stability. Such a compound has excellent lifetime characteristics resulting from its stable structure as compared to other positive electrode materials, but the compound may have degraded lifetime characteristics at high voltage, leading to limitations on operating voltage. However, the first particles PTC1 also contain manganese and may improve high voltage characteristics and energy density compared to general lithium iron phosphate-based compounds.

If the size of the particles is too small, binding force between a current collector and a positive electrode active material is low. Accordingly, an electrode plate may be hard to process, and a binder may be required in large quantities.

As shown in FIGS. 6 and 7, when the first active material layer ATL1 is introduced between the current collector COL1 and the second active material layer ATL2, and the second particles PTC2 are mixed with the first particles PTC1 in an appropriate ratio, an electrode plate may have improved binding force and the less binder BND may be required. In addition, the mixing may improve capacity, density characteristics, high temperature stability, and lifetime characteristics.

With respect to a total amount of the first particles PTC1, the second particles PTC2, and the third particles PTC3 included in the first active material layer ATL1 and the second active material layer ATL2, the first particles PTC1 may amount to about 30 wt% to about 40 wt%. For example, with respect to a total amount of the first particles PTC1, the second particles PTC2, and the third particles PTC3 included in the first active material layer ATL1 and the second active material layer ATL2, the first particles PTC1 may amount to about 35 wt%. That is, a ratio of the weight of the first particles PTC1 to the total weight of the first particles PTC1, the second particles PTC2, and the third particles PTC3 (weight ratio of the first particle PTC1) may be about 0.3 to about 0.4.

With respect to a total amount of the first particles PTC1, the second particles PTC2, and the third particles PTC3 included in the first active material layer ATL1 and the second active material layer ATL2, the second particles PTC2 may amount to about 15 wt% to about 30 wt%. For example, with respect to a total amount of the first particles PTC1, the second particles PTC2, and the third particles PTC3 included in the first active material layer ATL1 and the second active material layer ATL2, the second particles PTC2 may amount to about 20 wt% to about 30 wt%, or about 30 wt%. That is, a ratio of the weight of the second particles PTC2 to the total weight of the first particles PTC1, the second particles PTC2, and the third particles PTC3 (weight ratio of the second particle PTC2) may be about 0.15 to about 0.3.

With respect to a total amount of the first particles PTC1 and the second particles PTC2 included in the first active material layer ATL1, the second particles PTC2 may amount to about 40 wt% to about 60 wt%. For example, with respect to a total amount of the first particles PTC1 and the second particles PTC2 included in the first active material layer ATL1, the second particles PTC2 may amount to about 45 wt% to about 50 wt%.

Referring again to FIGS. 8 and 9, the second active material layer ATL2 according to embodiments of the present disclosure includes the third particles PTC3. With respect to a total amount of the first particles PTC1, the second particles PTC2, and the third particles PTC3 included in the first active material layer ATL1 and the second active material layer ATL2, the third particles PTC3 may amount to about 30 wt% to about 40 wt%. For example, with respect to a total amount of the first particles PTC1, the second particles PTC2, and the third particles PTC3 included in the first active material layer ATL1 and the second active material layer ATL2, the third particles PTC3 may amount to about 35 wt%. That is, a ratio of the weight of the second particle PTC2 to the total weight of the first particles PTC1, the second particles PTC2, and the third particles PTC3 (weight ratio of the third particles PTC3) may be about 0.3 to about 0.4.

When the amount of the first particles PTC1, the second particles PTC2, and the third particles PTC3 satisfies the ranges described above, the positive electrode active material layer AML1 may have improved binding force with respect to the current collector COL1. Accordingly, a rechargeable lithium battery having reduced resistance may be provided. In addition, when the amount of the first particles PTC1, the second particles PTC2, and the third particles PTC3 satisfies the ranges described above, a rechargeable lithium battery having excellent performance may be provided.

A total doping content of manganese may be about 0.49 to about 0.53. For example, the total doping content of manganese may be about 0.51. Total doping content of manganese (A+B) may be defined as the sum of a doping content (A) of manganese included in the first active material layer ATL1 and a doping content (B) of manganese included in the second active material layer ATL2. The doping content (A) of manganese included in the first active material layer ATL1 may be defined as the sum of a product of the manganese doping content ($x1$ in Formula 1) in the first particles PTC1 and the weight ratio of the first particles PTC1, and a product of the manganese doping content ($z2$ in Formula 2) in the second particles PTC2 and the weight ratio of the second particles PTC2. The doping content (B) of manganese included in the second active material layer ATL2 may be defined as a product of the manganese doping content ($x3$ in Formula 3) in the third particles PTC3 and the weight ratio of the third particles PTC3.

When the total doping content of manganese satisfies the ranges described above, the positive electrode active material layer AML1 may have improved binding force with respect to the current collector COL1. Accordingly, a rechargeable lithium battery having reduced resistance may be provided. In addition, a rechargeable lithium battery having excellent performance may be provided.

The positive electrode for a rechargeable lithium battery according to embodiments of the present disclosure has the following effects.

A relatively large amount of the first binder BND1 may be required to attach the small nano-sized particle NP (see FIG. 10) having a small average diameter to the current collector COL1, whereas a relatively small amount of the first binder BND1 may be required to fix the first particles PTC1 having a large average diameter and/or the second particles PTC2 having a small BET specific surface area and a large average diameter onto the first active material layer ATL1. The positive electrode active material layer AML1 according to embodiments of the present disclosure includes the first particles PTC1, the second particles PTC2, and the third particles PTC3, and introduces the first active material layer ATL1 and the second active material layer ATL2, and may thus include a nano-sized olivine-based compound in large quantities and increase binding force with respect to a current collector. The configuration thereby facilitates preparation of an electrode plate and reduces resistance of the electrode plate. In addition, a rechargeable lithium battery having excellent capacity and lifetime characteristics along with high operating voltage and energy density may be provided.

Hereinafter, the present disclosure will be described in more detail through Examples. However, Examples are only illustrations for describing the present disclosure, and the scope of the present disclosure is not limited to Examples.

**Preparation Example 1: Preparation of NCM Particles**

A mid nickel-based precursor was prepared using a coprecipitation method. Specifically, as raw materials for nickel-based metal hydroxide, nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water as a solvent at a molar ratio of 6:1:3 to prepare a metal raw material mixture. The metal raw material mixture, aqueous ammonia, and sodium hydroxide were added into a reactor and subjected to a reaction. The slurry solution in the reactor was filtered and washed with high purity distilled water. The washed material was dried in a hot air oven at 210 °C for 24 hours to obtain a small particle precursor ($Ni_{0.60}Co_{0.1}Mn_{0.3}(OH)_2$) powder having an average diameter of about 4 $\mu$m.

The mid nickel-based precursor and anhydrous lithium hydroxide (LiOH) were dry mixed using a Henschel mixer. Lithium and transition metal were mixed at a molar ratio of about 1.05:1. The transition metal is the sum total of transition metals contained in the mid nickel-based precursor (Ni+Co+Mn). A melting agent was further added to the mixture, and the mixture was heat treated (i.e., firing process) at about 850 °C for 15 hours in an oxygen atmosphere to synthesize mid nickel-based positive electrode active material particles. The particles were ground using a jet mill at a pressure of 3 bar.

The particles were added to distilled water and washed. Aluminium oxide corresponding to 0.5 mol% with respect to the total of transition metals in the particles were added to perform aluminium coating. The second particles were dried at about 150 °C for about 12 hours and were subjected to a heat treatment (i.e., surface treatment) at about 800 °C for 15 hours in an oxygen atmosphere. The lithium nickel cobalt manganese (NCM) particles were represented by the formula approximately $LiNi_{0.6}Co_{0.1}Mn_{0.3}O_2$.

**Preparation Example** 2: Preparation of LMFP Particles in the form of Secondary Particles

A manganese iron phosphate precursor ($Mn_{0.6}Fe_{0.4}PO_4$), lithium carbonate, magnesium dioxide, and titanium dioxide were added to water at a molar ratio of (Mn+Fe):Li:Mg:Ti of 1:1.03:0.01:0.004. 10 wt% of glucose was further added to the mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain lithium manganese iron phosphate (LMFP) particles in the form of a secondary particles. The LMFP particles in the form of a secondary particles were represented by the formula approximately $LiMn_{0.6}Fe_{0.4}PO_4$.

**Preparation Example 3: Preparation of LMFP Particles in the form of Single Particles**

A manganese iron phosphate precursor ($Mn_{0.6}Fe_{0.4}PO_4$), lithium carbonate, magnesium dioxide, and titanium dioxide were added to water at a molar ratio of (Mn+Fe):Li:Mg:Ti of 1:1.03:0.01:0.004. 10 wt% of glucose was further added to the mixture. The mixture was subjected to a wet grinding process through ball milling. The mixture was evaporated to dryness on a heating tray and then placed and dried in a vacuum oven at 85 °C for 4 hours. The dried mixture was fired at 650 °C for 10 hours in a nitrogen atmosphere. The fired product was ground at a rotation speed of 8000 rpm to obtain LMFP particles in the form of single particles. The LMFP particles in the form of single particle were represented by the formula approximately $LiMn_{0.6}Fe_{0.4}PO_4$.

**Example 1: Preparation of Positive Electrode including First Active Material Layer and Second Active Material Layer**

The NCM particles, the LMFP particles in the form of secondary particles, a first binder (polyvinylidene fluoride), and a first conductive material (carbon black) were dispersed in N-methylpyrrolidone at a weight ratio of 0.450:0.526:0.012:0.012 to prepare a first active material slurry.

The LMFP particles in the form of single particles, a second binder (polyvinylidene fluoride), and a second conductive material (carbon black) were dispersed in N-methylpyrrolidone at a weight ratio of 0.94:0.03:0.03 to prepare a second active material slurry.

The first active material slurry was applied onto a 15 $\mu$m thick aluminium (Al) thin film, which is a current collector, and dried to form a first active material layer. The second active material slurry was applied onto the first active material layer and dried to form a second active material layer. The first active material layer and the second active material layer were formed such that the NCM particle, the LMFP particle in the form of a secondary particle in the first active material layer, and the LMFP particles in the form of single particles in the second active material layer were at a weight ratio of 30:35:35. Through a roll press, a positive electrode in which the aluminium current collector, the first active material layer, and the second active material layer were stacked in this order was prepared. A thickness ratio of the first active material layer and the second active material layer was 5:5.

**Example 2: Preparation of Positive Electrode including First Active Material Layer and Second Active Material Layer**

A positive electrode was prepared in the same manner as in Example 1, except that the LMFP particles in the form of secondary particles, the second binder (polyvinylidene fluoride), and the second conductive material (carbon black) were dispersed in N-methylpyrrolidone at a weight ratio of 0.976:0.012:0.012 to prepare a second active material slurry. A thickness ratio of the first active material layer and the second active material layer was 5:5.

**Comparative Example 1: Preparation of Positive Electrode including First Active Material Layer**

A positive electrode including a first active material layer containing only NCM particles was prepared.

The NCM particles, the first binder (polyvinylidene fluoride), and the first conductive material (carbon black) were dispersed in N-methylpyrrolidone at a weight ratio of 0.976:0.012:0.012 to prepare a first active material slurry. The first active material slurry was applied onto a 15 $\mu$m thick aluminium (Al) thin film, which is a current collector, and dried to form a first active material layer. Through a roll press, a positive electrode in which the aluminum current collector and the first active material layer were stacked in this order was prepared.

**Comparative Example 2: Preparation of Positive Electrode including First Active Material Layer**

A positive electrode including a first active material layer containing only LMFP particles in the form of a secondary particle was prepared.

A positive electrode was prepared in the same manner as in Comparative Example 1, except that the LMFP particles in the form of secondary particles, the first binder (polyvinylidene fluoride), and the first conductive material (carbon black) were dispersed in N-methylpyrrolidone at a weight ratio of 0.976:0.012:0.012 to prepare a first active material slurry.

**Comparative Example 3: Preparation of Positive Electrode including First Active Material Layer**

A positive electrode including a first active material layer containing only LMFP particles in the form of single particles was prepared.

The positive electrode was prepared in the same manner as in Comparative Example 1, except that the LMFP particles in the form of single particles, the first binder (polyvinylidene fluoride), and the first conductive material (carbon black) were dispersed in N-methylpyrrolidone at a weight ratio of 0.94:0.03:0.03 to prepare a first active material slurry.

**Comparative Example 4: Preparation of Positive Electrode including First Active Material Layer**

A positive electrode including only a first active material layer having the NCM particles and the LMFP particles in the form of secondary particles at a weight ratio of 70:30 was prepared.

The positive electrode was prepared in the same manner as in Comparative Example 1, except that the NCM particles, the LMFP particles in the form of secondary particles, the first binder (polyvinylidene fluoride), and the first conductive material (carbon black) were dispersed in N-methylpyrrolidone at a weight ratio of 0.683:0.293:0.012:0.012 to prepare a first active material slurry.

## Comparative Example 5: Preparation of Positive Electrode including First Active Material Layer

A positive electrode including only a first active material layer having the NCM particles and the LMFP particles in the form of a secondary particle at a weight ratio of 60:40 was prepared.

The positive electrode was prepared in the same manner as in Comparative Example 1, except that the NCM particles, the LMFP particles in the form of secondary particles, the first binder (polyvinylidene fluoride), and the first conductive material (carbon black) were dispersed in N-methylpyrrolidone at a weight ratio of 0.586:0.390:0.012:0.012 to prepare a first active material slurry.

## Comparative Example 6: Preparation of Positive Electrode including First Active Material Layer

A positive electrode including only a first active material layer having the NCM particles and the LMFP particles in the form of secondary particles at a weight ratio of 50:50 was prepared.

The positive electrode was prepared in the same manner as in Comparative Example 1, except that the NCM particles, the LMFP particles in the form of secondary particles, the first binder (polyvinylidene fluoride), and the first conductive material (carbon black) were dispersed in N-methylpyrrolidone at a weight ratio of 0.488:0.488:0.012:0.012 to prepare a first active material slurry.

## Comparative Example 7: Preparation of Positive Electrode including First Active Material Layer

A positive electrode including only a first active material layer having the NCM particles and the LMFP particles in the form of secondary particles at a weight ratio of 40:60 was prepared.

The positive electrode was prepared in the same manner as in Comparative Example 1, except that the NCM particles, the LMFP particles in the form of secondary particles, the first binder (polyvinylidene fluoride), and the first conductive material (carbon black) were dispersed in N-methylpyrrolidone at a weight ratio of 0.390:0.586:0.012:0.012 to prepare a first active material slurry.

## Comparative Example 8: Preparation of Positive Electrode including First Active Material Layer

A positive electrode including only a first active material layer having the NCM particles and the LMFP particles in the form of secondary particles at a weight ratio of 30:70 was prepared.

The positive electrode was prepared in the same manner as in Comparative Example 1, except that the NCM particles, the LMFP particles in the form of secondary particles, the first binder (polyvinylidene fluoride), and the first conductive material (carbon black) were dispersed in N-methylpyrrolidone at a weight ratio of 0.293:0.683:0.012:0.012 to prepare a first active material slurry.

## Comparative Example 9: Preparation of Positive Electrode including First Active Material Layer

A positive electrode including only a first active material layer having the NCM particles and the LMFP particles in the form of secondary particles at a weight ratio of 20:80 was prepared.

The positive electrode was prepared in the same manner as in Comparative Example 1, except that the NCM particles, the LMFP particles in the form of secondary particles, the first binder (polyvinylidene fluoride), and the first conductive material (carbon black) were dispersed in N-methylpyrrolidone at a weight ratio of 0.195:0.781 :0.012:0.012 to prepare a first active material slurry.

## Comparative Example 10: Preparation of Positive Electrode including First Active Material Layer

A positive electrode including only a first active material layer having the NCM particles and the LMFP particles in the form of secondary particles at a weight ratio of 10:90 was prepared.

The positive electrode was prepared in the same manner as in Comparative Example 1, except that the NCM particles, the LMFP particles in the form of secondary particles, the first binder (polyvinylidene fluoride), and the first conductive material (carbon black) were dispersed in N-methylpyrrolidone at a weight ratio of 0.098:0.878:0.012:0.012 to prepare a first active material slurry.

**Comparative Example 11: Preparation of Positive Electrode including First Active Material Layer**

A positive electrode including only a first active material layer having the NCM particles, the LMFP particles in the form of secondary particles, and the LMFP particle in the form of a single particle at a weight ratio of 30:35:35 was prepared.

The positive electrode was prepared in the same manner as in Comparative Example 1, except that the NCM particles, the LMFP particles in the form of secondary particles, the LMFP particles in the form of single particles, the first binder (polyvinylidene fluoride), and the first conductive material (carbon black) were dispersed in N-methylpyrrolidone at a weight ratio of 0.292:0.342:0.342:0.012:0.012 to prepare a first active material slurry.

**Comparative Example 12: Preparation of Positive Electrode including First Active Material Layer**

A positive electrode including only a first active material layer having the NCM particles and the LMFP particles in the form of single particles at a weight ratio of 30:70 was prepared.

The positive electrode was prepared in the same manner as in Comparative Example 1, except that the NCM particles, the LMFP particles in the form of single particles, the first binder (polyvinylidene fluoride), and the first conductive material (carbon black) were dispersed in N-methylpyrrolidone at a weight ratio of 0.293:0.683:0.012:0.012 to prepare a first active material slurry.

**Reference Example 13: Preparation of Positive Electrode including First Active Material Layer and Second Active Material Layer**

A positive electrode with FAD2/FAD1=1 was prepared.

The positive electrode was prepared in the same manner as in Example 1, except that the NCM particles, the LMFP particles in the form of secondary particles, the first binder (polyvinylidene fluoride), and the first conductive material (carbon black) were dispersed in N-methylpyrrolidone at a weight ratio of 0.450:0.526:0.012:0.012 to prepare a first active material slurry, and the LMFP particles in the form of single particles, the second binder (polyvinylidene fluoride), and the second conductive material (carbon black) were dispersed in N-methylpyrrolidone at a weight ratio of 0.976:0.012:0.012 to prepare a second active material slurry.

**Reference Example 14: Preparation of Positive Electrode including First Active Material Layer and Second Active Material Layer**

A positive electrode with FAD2/FAD1=4.2 was prepared.

A positive electrode was prepared in the same manner as in Example 1, except that the NCM particles, the LMFP particles in the form of secondary particles, the first binder (polyvinylidene fluoride), and the first conductive material (carbon black) were dispersed in N-methylpyrrolidone at a weight ratio of 0.450:0.526:0.012:0.012 to prepare a first active material slurry, and the LMFP particles in the form of single particles, the second binder (polyvinylidene fluoride), and the second conductive material (carbon black) were dispersed in N-methylpyrrolidone at a weight ratio of 0.9:0.05:0.05 to prepare a second active material slurry.

**Preparation of Rechargeable Lithium Battery**

A 2032 type coin half-cell was prepared using the prepared positive electrode and a lithium metal counter electrode as a counter electrode. A separator (thickness: about 16 $\mu$m) formed a porous polyethylene (PE) film was placed between the positive electrode and the lithium metal counter electrode, and an electrolyte solution was injected to prepare a rechargeable lithium battery. As an electrolyte, an electrolyte solution obtained by mixing 1.3 M $LiPF_6$ with a mixed solvent containing ethylene carbonate (EC), ethylmethyl carbonate (EMC), and dimethyl carbonate (DMC) in a volume ratio of 3:4:3 was used.

The properties of the Examples, Comparative Examples, and Reference Examples are shown in Tables 1 and 2.

Table 1

| Item | Electrode plate structure | Mn doping content when mixed | Weight ratio of particle | | |
| --- | --- | --- | --- | --- | --- |
| | | | NCM particles | LMFP particles in the form of secondary particles | LMFP particles in the form of single particles |
| Example 1 | Double layer | 0.51 | 30 | 35 | 35 |

(continued)

| Item | Electrode plate structure | Mn doping content when mixed | Weight ratio of particle | | |
|---|---|---|---|---|---|
| | | | NCM particles | LMFP particles in the form of secondary particles | LMFP particles in the form of single particles |
| Example 2 | Double layer | 0.51 | 30 | 70 | - |
| Comparative Example 1 | Single layer | - | 100 | - | - |
| Comparative Example 2 | Single layer | - | - | 100 | - |
| Comparative Example 3 | Single layer | - | - | - | 100 |
| Comparative Example 4 | Single layer | 0.39 | 70 | 30 | - |
| Comparative Example 5 | Single layer | 0.42 | 60 | 40 | - |
| Comparative Example 6 | Single layer | 0.45 | 50 | 50 | - |
| Comparative Example 7 | Single layer | 0.48 | 40 | 60 | - |
| Comparative Example 8 | Single layer | 0.51 | 30 | 70 | - |
| Comparative Example 9 | Single layer | 0.54 | 20 | 80 | - |
| Comparative Example 10 | Single layer | 0.57 | 10 | 90 | - |
| Comparative Example 11 | Single layer | 0.51 | 30 | 35 | 35 |
| Comparative Example 12 | Single layer | 0.51 | 30 | - | 70 |
| Reference Example 13 | Double layer | 0.49 | 30 | 35 | 35 |
| Reference Example 14 | Double layer | 0.49 | 30 | 35 | 35 |

Table 2

| Item | Content of first functional additive FAD1 in first active material layer (parts by weight/100 parts by weight of first active material layer) | | Content of second functional additive FAD2 in second active material layer (parts by weight/100 parts by weight of second active material layer) | | Weight ratio of FAD2/FAD1 |
|---|---|---|---|---|---|
| | First binder | First conductive material | Second binder | Second conductive material | |
| Example 1 | 1.2 | 1.2 | 3 | 3 | 2.5 |
| Example 2 | 1.2 | 1.2 | 1.2 | 1.2 | 1.0 |
| Comparative Example 1 | 1.2 | 1.2 | | | |
| Comparative Example 2 | 1.2 | 1.2 | | | |
| Comparative Example 3 | 1.2 | 1.2 | | | |
| Comparative Example 4 | 1.2 | 1.2 | | | |
| Comparative Example 5 | 1.2 | 1.2 | | | |
| Comparative Example 6 | 1.2 | 1.2 | | | |
| Comparative Example 7 | 1.2 | 1.2 | | | |

(continued)

| Item | Content of first functional additive FAD1 in first active material layer (parts by weight/100 parts by weight of first active material layer) | | Content of second functional additive FAD2 in second active material layer (parts by weight/100 parts by weight of second active material layer) | | Weight ratio of FAD2/FAD1 |
|---|---|---|---|---|---|
| | First binder | First conductive material | Second binder | Second conductive material | |
| Comparative Example 8 | 1.2 | 1.2 | | | |
| Comparative Example 9 | 1.2 | 1.2 | | | |
| Comparative Example 10 | 1.2 | 1.2 | | | |
| Comparative Example 11 | 1.2 | 1.2 | | | |
| Comparative Example 12 | 1.2 | 1.2 | | | |
| Reference Example 13 | 1.2 | 1.2 | 1.2 | 1.2 | 1 |
| Reference Example 14 | 1.2 | 1.2 | 5.0 | 5.0 | 4.2 |

## Evaluation Example 1: Analysis of Positive Electrode Active Material Surface

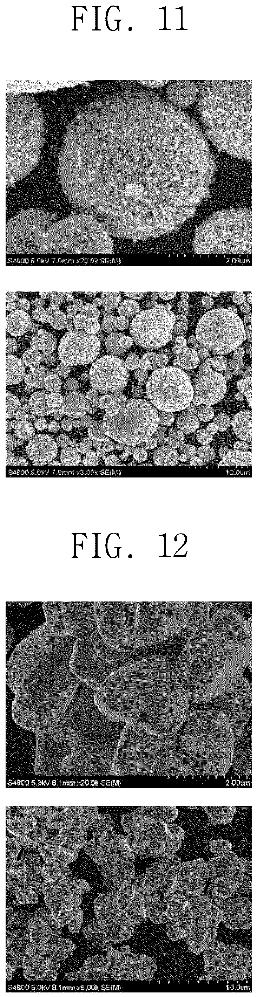

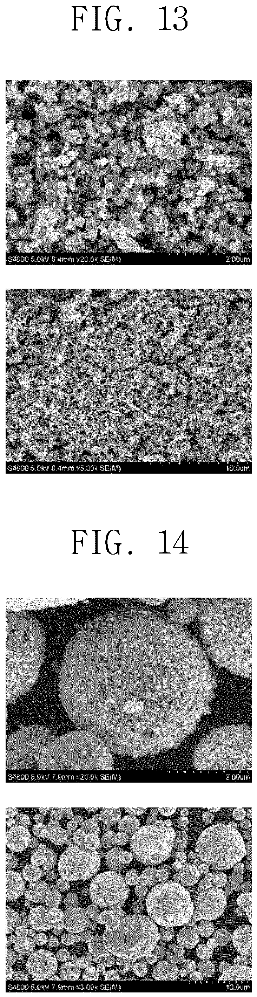

SEM images for each of the first, second, and third particles prepared in Preparation Examples 1 to 3 are shown in FIGS. 11 to 14. Referring to FIG. 11, it is seen that the first particles according to Preparation Example 2 are in the form of spherical secondary particles in which a plurality of primary particles are aggregated. Referring to FIG. 12, it is seen that the second particles according to Preparation Example 1 are in the form of micro-sized single particles. Referring to FIG. 13, it is seen that the third particles according to Preparation Example 3 are in the form of a nano-sized fine single particles. Referring to FIG. 14, it is seen that the third particles according to Preparation Example 2 are in the form of spherical secondary particles in which a plurality of primary particles are aggregated.

## Evaluation Example 2: Evaluation of Active Material

Pellet density (PD) of the positive electrode active materials of Examples, Comparative Examples, and Reference Examples was measured, and the results are shown in Table 3.

Table 3

| Item | Pellet density (g/cc) |
|---|---|
| Example 1 | 2.57 |
| Example 2 | 2.62 |
| Comparative Example 1 | 3.10 |
| Comparative Example 2 | 2.41 |
| Comparative Example 3 | 2.35 |
| Comparative Example 4 | 2.89 |
| Comparative Example 5 | 2.82 |
| Comparative Example 6 | 2.76 |
| Comparative Example 7 | 2.69 |

(continued)

| Item | Pellet density (g/cc) |
|---|---|
| Comparative Example 8 | 2.62 |
| Comparative Example 9 | 2.55 |
| Comparative Example 10 | 2.48 |
| Comparative Example 11 | 2.60 |
| Comparative Example 12 | 2.58 |
| Reference Example 13 | 2.56 |
| Reference Example 14 | 2.56 |

### Evaluation Example 3: Evaluation of Resistance and Binding force

Characteristics of rechargeable lithium batteries prepared using positive electrode active materials prepared from each of the Examples, Comparative Examples, and Reference Examples were evaluated.

For initial charging/discharging, the rechargeable lithium batteries were initially charged at a constant current of 0.2 C a constant voltage (4.45 V) (cut-off 0.05C) at 25 °C and, after 10 minutes of rest, discharged up to 3.0 V at a constant current of 0.2 C, thereby obtaining the initial charge capacity (charge amount at 0.2 C (mAh/g)) and the initial discharge capacity (discharge amount at 0.2 C (mAh/g)), and the efficiency at 0.2 C (%) is expressed as the initial discharge capacity/the initial charge capacity. The rechargeable lithium batteries were charged to SOC50 at a constant current of 0.2 C, and then rest for 1 hour at SOC50. After that, the rechargeable lithium batteries were discharged at 1.0 C for 10 seconds, followed by another 10-second rest. At this point, the difference between the voltage after the discharge and the voltage after the 10-second rest was divided by the current to calculate the cell resistance (DC-IR). The results are shown in Table 4 below.

Table 4

| Item | Charge amount at 0.2 C (mAh/g) | Discharge amount at 0.2 C (mAh/g) | Efficiency at 0.2 C (%) | DCIR, SOC50 (Ω, 0.2 C/1.0 C) |
|---|---|---|---|---|
| Example 1 | 177.1 | 162.8 | 91.9 | 22.1 |
| Example 2 | 177.5 | 163.2 | 91.9 | 20.6 |
| Comparative Example 1 | 221.3 | 196.3 | 88.7 | 5.5 |
| Comparative Example 2 | 156.2 | 148.1 | 94.8 | 37.2 |
| Comparative Example 3 | 155.0 | 145.0 | 93.5 | 43.0 |
| Comparative Example 4 | 201.8 | 181.8 | 90.1 | 15.0 |
| Comparative Example 5 | 195.3 | 177.0 | 90.7 | 18.2 |
| Comparative Example 6 | 188.8 | 172.2 | 91.2 | 21.4 |
| Comparative Example 7 | 182.2 | 167.4 | 91.8 | 24.5 |
| Comparative Example 8 | 175.7 | 162.6 | 92.5 | 27.7 |
| Comparative Example 9 | 169.2 | 157.7 | 93.2 | 30.9 |
| Comparative Example 10 | 162.7 | 152.9 | 94.0 | 34.0 |
| Comparative Example 11 | 175.3 | 161.5 | 92.1 | 29.7 |
| Comparative Example 12 | 174.9 | 160.4 | 91.7 | 31.8 |
| Reference Example 13 | 175.8 | 161.5 | 91.9 | 26.3 |
| Reference Example 14 | 174.1 | 158.9 | 91.3 | 30.1 |

Referring to Table 4, the rechargeable lithium batteries including the positive electrodes according to Examples 1 and 2 have a higher discharge amount and lower resistance than Comparative Examples 2, 3, and 12. Accordingly, it is determined that the addition of NCM particles increases binding force of the positive electrode containing an olivine-based compound.

In addition, it can be seen that the rechargeable lithium batteries including the positive electrodes according to Examples 1 and 2 have lower resistance than Reference Examples 13 and 14. Accordingly, it can be seen that when the ratio of the weight ratio of the second functional additive to the weight ratio of the first functional additive satisfies the desired range, binding force of the positive electrode may be increased.

**Evaluation Example 4: Evaluation of Battery Properties**

Characteristics of rechargeable lithium batteries prepared using positive electrode active materials prepared from each of the Examples, Comparative Examples, and Reference Examples were evaluated.

For initial charging/discharging, the rechargeable lithium batteries were initially charged at a constant current of 0.2 C and a constant voltage (4.45 V) (cut-off 0.05C) at 25 °C, and, after 10 minutes of rest, discharged up to 3.0 V at a constant current of 0.2 C, thereby obtaining the initial charge capacity and the initial discharge capacity, and then average voltage and energy density were evaluated. The average voltage was obtained by integrating an area under a discharge voltage curve (a-voltage-capacity graph) after the initial charging and discharging of the cells and then dividing the integral by discharge capacity. The energy density was obtained by using a calculation equation of {average driving voltage (V) x capacity (Ah)/cell weight (kg)}, wherein the capacity was calculated by multiplying a positive electrode weight (g) and discharge capacity (mAh/g). Thereafter, the charging/discharging was repeated 50 times at 45 °C and 1.0 C/1.0 C, and the lifetime (%, @ 50ccl) is expressed

as the discharge capacity after the 50th cycle/initial discharge capacity. Coin cells were additionally prepared and then the batteries were initially charged at a constant current of 0.2 C and a constant voltage (4.45 V) (cut-off 0.05C) at 25 °C, and after 10 minutes of rest, discharged up to 3.0 V at a constant current of 0.2 C and additionally charged, and then measured at -20 °C for discharge capacity. The results of evaluating the battery properties are shown in Table 5 below.

Table 5

| Item | Capacity at -20 °C (mAh/g) | Average voltage | Lifetime at 1 C (%, @50ccl) | Energy density (Wh/kg) |
|---|---|---|---|---|
| Example 1 | 101 | 3.62 | 99.9 | 586 |
| Example 2 | 105 | 3.62 | 99.9 | 587 |
| Comparative Example 1 | 65 | 3.65 | 98.4 | 636 |
| Comparative Example 2 | 126 | 3.60 | 99.8 | 488 |
| Comparative Example 3 | 96 | 3.60 | 99.1 | 478 |
| Comparative Example 4 | 83 | 3.64 | 98.9 | 661 |
| Comparative Example 5 | 89 | 3.63 | 99.1 | 643 |
| Comparative Example 6 | 96 | 3.63 | 99.2 | 624 |
| Comparative Example 7 | 102 | 3.62 | 99.3 | 604 |
| Comparative Example 8 | 108 | 3.62 | 99.5 | 581 |
| Comparative Example 9 | 114 | 3.61 | 99.6 | 559 |
| Comparative Example 10 | 120 | 3.61 | 99.8 | 537 |
| Comparative Example 11 | 97 | 3.62 | 99.1 | 580 |
| Comparative Example 12 | 87 | 3.62 | 98.9 | 578 |
| Reference Example 13 | 97 | 3.62 | 99.5 | 581 |
| Reference Example 14 | 89 | 3.62 | 98.8 | 577 |

Referring to Tables 4 and 5, it can be seen that the rechargeable lithium batteries including the positive electrodes according to Examples 1 and 2 have excellent capacity and lifetime characteristics along with high operating voltage and energy density.

A positive electrode for a rechargeable lithium battery according to embodiments of the present disclosure contains a nano-sized olivine-based compound in large quantities and increases binding force with respect to a current collector and may thus facilitate preparation of an electrode plate and reduce resistance of the electrode plate.

A rechargeable lithium battery according to embodiments of the present disclosure may have excellent capacity and lifetime characteristics along with high operating voltage and energy density.

Although the embodiments of the present disclosure have been described above with reference to the accompanying drawings, the present disclosure may be applied in other specific forms without changing the technical idea or essential features thereof. Therefore, the embodiments described above are presented as examples in all respects and are not restrictive.

**Claims**

1. A positive electrode for a rechargeable lithium battery comprising:

   a current collector;
   a first active material layer on the current collector, the first active material layer including first particles, second particles, a first binder, and a first conductive material; and
   a second active material layer on the first active material layer, the second active material layer including third particles, a second binder, and a second conductive material,
   wherein the first particles include an olivine structured compound of Formula 1,
   the second particles include a layered compound of Formula 2,
   the third particles include an olivine structured compound of Formula 3,
   wherein each of the first particles includes a plurality of first primary particles aggregated together,
   wherein the first particles have an average diameter of about 2 $\mu$m to about 15 $\mu$m,
   wherein the first primary particles have an average diameter of about 200 nm or less,
   wherein the third particles are single particles,
   wherein the third particles have an average particle diameter of about 100 nm to about 2 $\mu$m,
   wherein Formula 1 is:

   $$Li_{a1}Mn_{x1}Fe_{y1}B1_{z1}PO_{4-b1}$$

   with $0.8 \leq a1 \leq 1.2$, $0.4 \leq x1 \leq 0.8$, $0 \leq y1 \leq 0.6$, $0 \leq z1 \leq 0.05$, $0 < b1 \leq 0.05$, and $x1 + y1 + z1 = 1$, and with B1 including at least one of Al, Ti, V, and Mg,
   wherein Formula 2 is:

   $$Li_{a2}Ni_{x2}Co_{y2}Mn_{z2}B2_{c2}O_{2-b2}$$

   with $0.8 \leq a2 \leq 1.2$, $0.5 \leq x2 \leq 0.8$, $0 \leq y2 \leq 0.3$, $0.1 \leq z2 \leq 0.5$, $0 \leq c2 \leq 0.1$, $0 < b2 \leq 0.05$, and $x2 + y2 + z2 + c2 = 1$ being satisfied, and with B2 including at least one of Ti, Mg, V, Nb, and Al, and
   wherein Formula 3 is:

   $$Li_{a3}Mn_{x3}Fe_{y3}B3_{z3}PO_{4-b3}$$

   with $0.8 \leq a3 \leq 1.2$, $0.4 \leq x3 \leq 0.8$, $0 \leq y3 \leq 0.6$, $0 \leq z3 \leq 0.05$, $0 < b3 \leq 0.05$, and $x3 + y3 + z3 = 1$ being satisfied, and with B3 including at least one of Al, Ti, V, and Mg.

2. The positive electrode for a rechargeable lithium battery of claim 1, wherein the first binder and the first conductive material constitute a first functional additive,

   wherein the second binder and the second conductive material constitute a second functional additive, and
   wherein a weight ratio of the first functional additive in the first active material layer is lower than a weight ratio of the second functional additive in the second active material layer.

3. The positive electrode for a rechargeable lithium battery of claim 2, wherein a ratio of the weight ratio of the second functional additive to the weight ratio of the first functional additive is about 1.5 to about 4.

4. The positive electrode for a rechargeable lithium battery of any one of claims 1 to 3, wherein an amount of the first binder is about 1.2 parts by weight to about 3 parts by weight with respect to 100 parts by weight of the first active material layer, and
   wherein an amount of the second binder is about 1.2 parts by weight to about 5 parts by weight with respect to 100 parts by weight of the second active material layer.

5. The positive electrode for a rechargeable lithium battery of any one of claims 1 to 4, wherein an amount of the first conductive material is about 1.2 parts by weight to about 3 parts by weight with respect to 100 parts by weight of the first active material layer, and
an amount of the second conductive material is about 1.2 parts by weight to about 5 parts by weight with respect to 100 parts by weight of the second active material layer.

6. The positive electrode for a rechargeable lithium battery of any one of claims 1 to 5, wherein with respect to a total amount of the first particles, the second particles, and the third particles included in the first active material layer and the second active material layer, the amount of the second particle is about 15 wt% to about 30 wt%.

7. The positive electrode for a rechargeable lithium battery of any one of claims 1 to 6, wherein a total doping amount of manganese included in the first active material layer and the second active material layer is about 0.49 to about 0.53.

8. The positive electrode for a rechargeable lithium battery of any one of claims 1 to 7, wherein the first particles comprise coating layers including carbon, and the first particles include about 1.5 wt% to about 2.5 wt% of carbon.

9. The positive electrode for a rechargeable lithium battery of any one of claims 1 to 8, wherein the first particles further comprise grain boundary coating layers on interfaces between the first primary particles, and the grain boundary coating layers include carbon.

10. The positive electrode for a rechargeable lithium battery of any one of claims 1 to 9, wherein the first particles have a porosity of about 20% to about 40%.

11. The positive electrode for a rechargeable lithium battery of any one of claims 1 to 10, wherein a Span value of the first particle, analyzed through a particle size analyzer, is about 0.3 to about 0.75.

12. The positive electrode for a rechargeable lithium battery of any one of claims 1 to 11, wherein the second particles are single crystals, and the second particle have an average diameter of about 2 $\mu$m to about 5 $\mu$m.

13. The positive electrode for a rechargeable lithium battery of any one of claims 1 to 12, wherein the second particles comprise at least one of single particles or secondary particles.

14. The positive electrode for a rechargeable lithium battery of any one of claims 1 to 13, wherein the second particles have a BET specific surface area of about 0.8 m$^2$/g to about 1.2 m$^2$/g.

15. A positive electrode for a rechargeable lithium battery, comprising:

a current collector;
a first active material layer on the current collector, the first active material layer including first particles, second particles, a first binder, and a first conductive material; and
a second active material layer on the first active material layer, the second active material layer including third particles, a second binder, and a second conductive material,
wherein the first particles include an olivine structured compound of Formula 1,
wherein the second particles include a layered compound of Formula 2,
wherein the third particles include an olivine structured compound of Formula 3,
wherein each of the first particles include a plurality of first primary particles aggregated together,
wherein the first particles have an average diameter of about 2 $\mu$m to about 15 $\mu$m,
wherein the first primary particles have an average diameter of about 200 nm or less,
wherein each of the third particles includes a plurality of fourth particles aggregated together,
wherein the third particles have an average diameter of about 2 $\mu$m to about 15 $\mu$m,
wherein the fourth particles are primary particles, and the fourth particles have an average diameter of about 200 nm or less,
wherein Formula 1 is:

$$Li_{a1}Mn_{x1}Fe_{y1}B1_{z1}PO_{4-b1}$$

with $0.8 \leq a1 \leq 1.2$, $0.4 \leq x1 \leq 0.8$, $0 \leq y1 \leq 0.6$, $0 \leq z1 \leq 0.05$, $0 \leq b1 \leq 0.05$, and $x1 + y1 + z1 = 1$ being satisfied, and with B1 including at least one of Al, Ti, V, and Mg,

wherein Formula 2 is:

$$Li_{a2}Ni_{x2}Co_{y2}Mn_{z2}B2_{c2}O_{2-b2}$$

with $0.8 \leq a2 \leq 1.2$, $0.5 \leq x2 \leq 0.8$, $0 \leq y2 \leq 0.3$, $0.1 \leq z2 \leq 0.5$, $0 \leq c2 \leq 0.1$, $0 \leq b2 \leq 0.05$, and $x2 + y2 + z2 + c2 = 1$ being satisfied, and with B2 including at least one of Ti, Mg, V, Nb, and Al, and

wherein Formula 3 is:

$$Li_{a3}Mn_{x3}Fe_{y3}B3_{z3}PO_{4-b3}$$

with $0.8 \leq a3 \leq 1.2$, $0.4 \leq x3 \leq 0.8$, $0 \leq y3 \leq 0.6$, $0 \leq z3 \leq 0.05$, $0 \leq b3 \leq 0.05$, and $x3 + y3 + z3 = 1$ being satisfied, and with B3 including at least one of Al, Ti, V, and Mg.

# FIG. 1

# FIG. 2

# FIG. 3

EP 4 645 458 A1

# FIG. 4

# FIG. 5

# FIG. 6

# FIG. 7

# FIG. 8

ATL2

PTC3

CDM2  ⎫
      ⎬ FAD2
BND2  ⎭

# FIG. 9

PTC3

PTC4  PTC4

ATL2

CDM2  ⎫
      ⎬ FAD2
BND2  ⎭

# FIG. 10

# FIG. 11

# FIG. 12

# FIG. 13

# FIG. 14

| | Europäisches Patentamt European Patent Office Office européen des brevets | **EUROPEAN SEARCH REPORT** | | **Application Number** EP 25 16 8640 |
|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/349334 A1 (DUMONT ERWAN [FR] ET AL) 3 December 2015 (2015-12-03) * paragraphs [0010] - [0020], [0023], [0026], [0028], [0033] - [0040], [0065] - [0078]; figure 4 * | 1-15 | INV. H01M4/36 H01M4/505 H01M4/525 H01M4/62 H01M10/0525 H01M4/02 |
| A | JP 6 560879 B2 (NEC ENERGY DEVICES LTD) 14 August 2019 (2019-08-14) * paragraphs [0012], [0019] - [0021]; claim 1 * | 1-15 | |

-----

-----

**TECHNICAL FIELDS SEARCHED (IPC)**

H01M

The present search report has been drawn up for all claims

| Place of search | Date of completion of the search | Examiner |
|---|---|---|
| Munich | 21 August 2025 | Mugnaini, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 8640

This annex lists the patent family members relating to the patent documents cited in  the above-mentioned European search report.
The members are as contained in the European Patent Office EDP file on
The European Patent Office is in no way liable for these particulars which are merely given for the purpose of information.

21-08-2025

| Patent document cited in search report | | Publication date | Patent family member(s) | | Publication date |
|---|---|---|---|---|---|
| US 2015349334 | A1 | 03-12-2015 | EP | 2939296 A1 | 04-11-2015 |
| | | | FR | 3000302 A1 | 27-06-2014 |
| | | | KR | 20150110510 A | 02-10-2015 |
| | | | US | 2015349334 A1 | 03-12-2015 |
| | | | WO | 2014102071 A1 | 03-07-2014 |
| JP 6560879 | B2 | 14-08-2019 | JP | 6560879 B2 | 14-08-2019 |
| | | | JP | 2016178070 A | 06-10-2016 |

EPO FORM P0459

For more details about this annex : see Official Journal of the European Patent Office, No. 12/82